# FASCICULE DE BREVET EUROPEEN

(11) **EP 0 889 450 B1**
(45) Date de publication et mention de la délivrance du brevet: **29.08.2007**
(21) Numéro de dépôt: 98202087.7
(22) Date de dépôt: 23.06.1998
(51) Int. Cl.: G07F 7/10

(54) **Méthode de chargement de donnees dans une carte à microprocesseur**
Verfahren zum Laden von Daten in eine Mikroprozessorkarte
Method for loading data into a microprocessor card

(30) Priorité: 04.07.1997 FR 9708635
(43) Date de publication de la demande: 07.01.1999
(73) Titulaire: SCHLUMBERGER INDUSTRIES, F-92542 Montrouge Cédex (FR); Groupement d'Intérêt Public "Carte de Professionnel de Santé", 75009 Paris (FR)
(72) Inventeur: Dietrich, Christian, 94220 Charenton (FR); Isphording, Willem, 75009 Paris (FR)
(74) Mandataire: Cour, Pierre

(56) Documents cités:
- EP-A- 0 707 290
- WO-A-93/20538
- FR-A- 2 536 928

## Description

La présente invention est relative à une méthode de chargement de données sécurisées dans une carte à microprocesseur.

Dans un système habituel, le chargement ou téléchargement des données dans une carte se fait par les moyens d'une application extérieure et avec une instruction spécifique au système d'exploitation de la carte. Les données chargées par l'application extérieure peuvent inclure, par exemple, des instructions supplémentaires complétant ou même remplaçant tout ou partie du jeu d'instructions du système d'exploitation de la carte normalement stocké dans la mémoire ROM de la carte.

Dans tout système utilisant une carte à microprocesseur apte à recevoir des données par téléchargement, le problème de fraude se présente. Il est connu, par exemple, de charger la carte avec un code frauduleux qui cause le déchargement de la mémoire système et/ou applicative de la carte. En regardant les données déchargées le fraudeur peut connaître, par exemple, les clés secrètes contenues dans la carte ou d'autres données normalement inaccessibles au monde extérieur. De plus, certaines instructions de type virus peuvent parasiter les fonctionnalités propres des cartes.

Un exemplaire d'un système conventionnel pour protéger une carte contre ce genre de fraude est décrit dans le brevet EP 0325506. Dans ce système, la carte à microprocesseur est programmée avec une clé secrète. Cette clé est également cryptée avec le numéro de fabrication de la carte pour générer un code spécifique à la carte en question. La carte permettra l'introduction de données seulement si elle est présentée avec ce code. La clé est envoyée aux personnes autorisées à programmer la carte qui peuvent lire le numéro de fabrication et générer le code nécessaire pour programmer la carte.

Ce système, qui est adapté aux besoins du domaine bancaire possède certains désavantages, notamment en ce qui concerne la manière de gérer la transmission de la clé secrète entre le fabricant et la personne habilitée à programmer la carte. Le système fonctionne seulement si les deux connaissent la valeur de la clé secrète. Il est impératif que cette information reste confidentielle, impliquant un niveau de sécurité assez élevé aux deux sites. Il faut également une voie de transmission sécurisée pour la transmission de la clé entre le fabricant et le programmeur. Comme décrit dans le brevet, cette voie doit être forcément différente de la voie de transmission de la carte elle-même.

Ces problèmes, qui sont moins gênants dans le contexte d'un système bancaire où il y a souvent seulement un fabricant et une entité bancaire fournie avec la clé secrète, deviennent plus importants dans d'autres applications, par exemple, dans le domaine des cartes pour le système santé ou sécurité sociale, où il peut y avoir plusieurs fabricants de cartes

La demande international publiée sous le numéro WO 9320538 A, décrit une méthode de communication cryptographique, Selon cette méthode, une carte contient une clé aléatoire Cette clé est encryptée au moyen d'une clé publique. La de aléatoire ainsi encryptée est ensuite envoyée à une station hôte. La station hôte décrypte la clé aléatoire au moyen d'une clé secrète. La station hôte encrypte les données à charger sur la carte au moyen de la clé aléatoire qui est originaire de la carte. La station hôte envoie les données ainsi encryptées à la carte. La carte décrypte les données provenant de la station hôte au moyen de la clé aléatoire qu'elle contient et qu'elle a fourni à la station hôte.

Le document EP 707 290 expose, à titre administratif, un système dans lequel un module de transfert calcule une signature qui lie de manière indissociable le contenu d'un message avec l'identité d'un emetteur de celui-ci.

Un des objets de l'invention est de fournir une méthode pour le chargement de données dans une carte qui évite les problèmes associés avec les méthodes conventionnelles

La méthode de la présente invention est caractérisée en ce que les données à charger dans la carte sont encryptées avec une clé secrète appartenant à la personne habilitée à programmer la carte, la carte à microprocesseur étant également fournie d'une clé publique apte à décrypter les données sous leur forme encryptée et dans laquelle la clé secrète et la clé publique appartiennent à un algorithme de cryptage asymétrique.

Dans un algorithme de cryptage asymétrique, par exemple l'algorithme RSA, seulement l'identité de la clé secrète doit être gardée confidentielle. La clé publique peut être divulguée sans risque majeur, puisqu'il n'y a aucune possibilité de déterminer la valeur de la clé secrète avec cette information. Sans la clé secrète, un fraudeur ne peut générer un code correctement encrypté.

Par conséquent, l'information concernant la clé publique nécessaire pour fabriquer une carte peut être confiée à plusieurs fabricants. Par contre, seule la personne possédant la clé secrète sera capable de générer les données correctement encryptées pour charger dans la carte.

De préférence, le format de données est prédéterminé avant l'étape d'encryptage par la personne habilitée, la carte à microprocesseur étant apte à rejeter les données après l'étape de décryptage si elles ne respectent par le format prédéterminé.

Par exemple, les données peuvent être formatées suivant une norme standard, telle que la norme ISO 9796, et la carte programmée à rejeter toutes les données sortant de l'étape de décryptage et qui n'ont pas ce format.

Dans un mode de réalisation, et pour augmenter la sécurité du système la carte comprend également un verrou logique qui reste ouvert pendant le chargement de données et qui se ferme immédiatement après leur chargement pour interdire la lecture subséquente des données stockées dans la carte. Le verrou logique peut, selon les formes connues, comprendre un fusible métallique ou matrice de décision apte à permettre la lecture seulement si les instructions correctes sont reçues.

La méthode de l'invention se prête spécialement au téléchargement de données, par exemple, par un réseau de communication. Même dans le cas d'une interception non autorisée des données, l'identité de la clé secrète restera inviolable.

L'invention sera mieux comprise à la lecture de la description qui suit d'un mode de réalisation de l'invention, donné à titre d'exemple illustratif et non limitatif et faisant référence au dessin annexé et sur lequel :

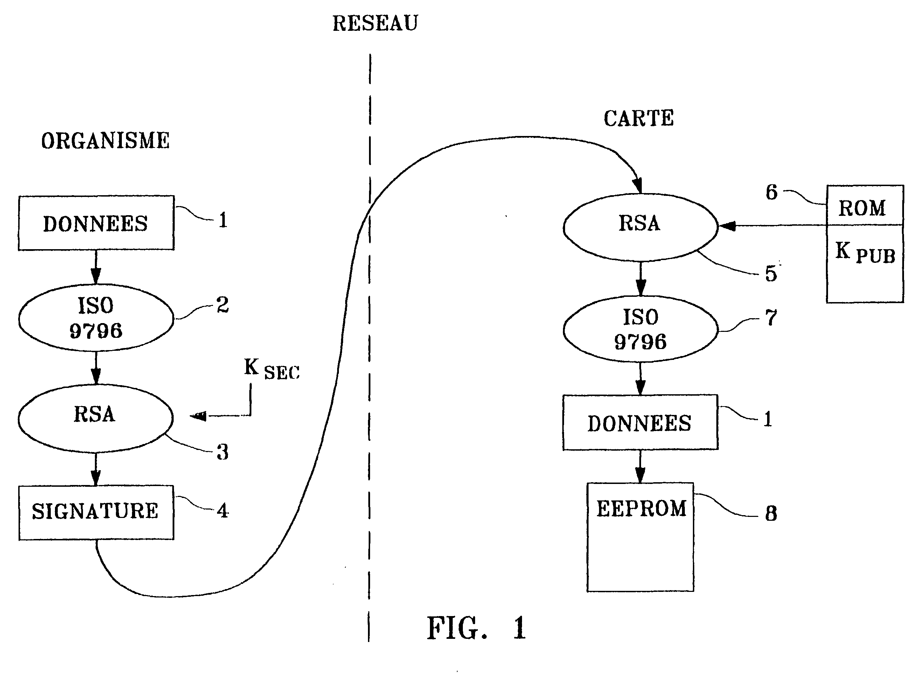

La figure 1 montre une méthode de chargement de données par un organisme ou une personne habilitée dans une carte à microprocesseur selon la présente invention.

En se référant à la figure 1, la partie gauche de cette figure montre les étapes effectuées par l'organisme ou personne habilité pour générer une "signature" représentant les données dans une forme encryptée. Ces étapes peuvent être effectuées automatiquement par les moyens d'un logiciel sur un ordinateur apte à recevoir les données et générer la signature.

Les données 1 sont d'abords traitées 2 suivant une norme standard, par exemple, la norme ISO 9796 pour les mettre dans un format acceptable à la carte. Puis, les données sont encryptées 3 avec une clé secrète K_{SEC} d'un algorithme asymétrique pour générer une signature 4. L'algorithme d'encryptage montré dans ce cas est l'algorithme RSA, mais d'autres algorithmes asymétriques seront connus de l'homme de métier.

La signature 4 est alors chargée dans la carte à microprocesseur. Etant données la nature sécurisée de la signature et l'impossibilité de déterminer la clé secrète, la signature peut être envoyée via un réseau de communication (téléphone, radio, etc.) pour télécharger la carte.

La signature reçue par la carte est alors traitée 5 par une clé publique K_{PUB} de l'algorithme RSA stocké dans la mémoire ROM 6 de la carte. Les données décryptées par la clé publique sont vérifiées 7 pour leur conformité avec la norme ISO 9796. Si les données sont conformes à ce format, elles sont stockées par la suite dans la mémoire EEPROM 8 de la carte.

Toute tentative d'introduction des données sans possession de l'information concernant la valeur de la clé secrète K_{SEC} et le format des données à introduire sera ainsi rejetée. Sans cette information, un fraudeur ne sera capable de générer les données encryptées dans une forme qui sera reconnue par la carte.

La carte peut également comprendre un verrou logique apte à s'ouvrir pendant le chargement des données et se fermer après cette étape pour garder secrètes les données chargées dans la carte. Ce verrou, qui n'est pas représenté dans la figure, peut être un fusible, dans le cas où un seul chargement de données est permis, ou peut être réalisé par les moyens d'une matrice de décision dans une façon connue.

L'utilisation d'un tel verrou empêche la lecture des données chargées dans la carte, qui peuvent comprendre, par exemple, les informations nécessaires pour reprogrammer la carte.

Comme il sera compris, la présente invention permet ainsi le chargement de données dans une carte à microprocesseur sécurisée et sans les désavantages des systèmes connus. En particulier, l'information concernant l'identité de la clé secrète sera détenue seulement par l'organisme responsable pour la programmation des cartes. Des clés publiques peuvent être distribuées à plusieurs fabricants de cartes sans aucun risque de compromettre la sécurité globale du système.

Cet aspect de l'invention rend le système particulièrement utile dans le domaine de la santé, où les cartes contiennent des informations confidentielles d'un patient. Ces données peuvent être médicales ou administratives. Dans ce cas, la responsabilité de programmer les cartes relèvera le plus souvent d'une seule organisation, tandis que la fabrication des cartes sera confiée à plusieurs sociétés.

Pour les mêmes raisons, le fait que la signature contenant les données encryptées pour programmer dans la carte peut être divulguée sur un réseau sans risque rend l'invention particulièrement avantageuse car la programmation des cartes s'effectuera souvent par le téléchargement pour éviter la nécessité de donner aux fabricants les informations à charger dans la carte.

## Revendications

1. Méthode de chargement de données dans une carte à microprocesseur
**caractérisée en ce que** la méthode comprend les étapes suivantes :
une étape d'encryptage dans laquelle des données à charger dans la carte sont encryptées avec une clé secrète appartenant à la personne habilitée à programmer la carte
- une étape dans laquelle la carte reçoit les données encryptées obtenues dans l'étape d'encryptage,
- une étape de décryptage dans laquelle les données encryptées sont décryptées dans la carte au moyen d'une clé publique présente dans la carte afin d'obtenir les données à charger dans la carte, la clé secrète et la clé publique appartenant à un algorithme de cryptage asymétrique ;
- une étape dans laquelle les données décryptées par la clé publique sont vérifiées pour leur conformité avec une norme,
une étape de stockage dans laquelle les données à charger dans la carte obtenues dans l'étape de décryptage sont stockées dans une mémoire présente dans la carte.

2. Méthode de chargement de données dans une carte à microprocesseur selon la revendication 1 et dans laquelle l'algorithme de cryptage est l'algorithme RSA.

3. Méthode de chargement de données dans une carte à microprocesseur selon la revendication 1 ou 2 et dans laquelle le format de données est prédéterminé avant l'étape d'encryptage par la personne habilitée, la carte à microprocesseur étant apte à rejeter les données après l'étape de décryptage si elles ne respectent pas le format prédéterminé.

4. Méthode de chargement de données dans une carte à microprocesseur selon la revendication 3 et dans laquelle les données sont formatées suivant la norme ISO 9796.

5. Méthode de chargement de données dans une carte à microprocesseur selon l'une quelconque des revendications 1 à 4 et dans laquelle la carte comprend également un verrou logique qui reste ouvert pendant le chargement de données et qui se ferme immédiatement après le chargement pour interdire la lecture subséquente des données stockées dans la carte.

6. Méthode de chargement de données dans une carte à microprocesseur selon l'une quelconque des revendications 1 à 5 et dans laquelle les données sont téléchargées dans la carte via un réseau de communication.

## Claims

1. Method to load data in a microprocessor card, **characterised in that** the method comprises the following steps:
- an encryption step in which data to be loaded in the card are encrypted with a secret key belonging to the person entitled to program the card,
- a step in which the card receives the encrypted data obtained in the encryption step,
- a decryption step in which the encrypted data are decrypted in the card using a public key present in the card to obtain the data to be loaded in the card, the secret key and the public key belonging to an asymmetric encryption algorithm,
- a step in which the data decrypted by the public key are verified to ensure that they comply with a standard,
- a storage step in which the data to be loaded in the card obtained in the decryption step are stored in a memory present in the card.

2. Method to load data in a microprocessor card according to claim 1 and in which the encryption algorithm is the RSA algorithm.

3. Method to load data in a microprocessor card according to claim 1 or 2 and in which the data format is predetermined before the encryption step by the person entitled, the microprocessor card being able to reject the data after the decryption step if they do not respect the predetermined format.

4. Method to load data in a microprocessor card according to claim 3 and in which the data are formatted according to standard ISO 9796.

5. Method to load data in a microprocessor card according to one of claims 1 to 4 and in which the card also comprises a logical lock which remains open while the data are being loaded and which closes immediately after the loading to prohibit the subsequent reading of data stored in the card.

6. Method to load data in a microprocessor card according to one of claims 1 to 5 and in which the data are downloaded in the card via a communication network.

## Patentansprüche

1. Verfahren zum Laden von Daten auf eine Karte mit Mikroprozessor, **dadurch gekennzeichnet, dass** das Verfahren folgende Schritte aufweist:
- Einen Verschlüsselungsschritt, in dem die auf die Karte zu ladenden Daten mit einem geheimen Schlüssel, welcher der zur der Karte befugten Person gehört, verschlüsselt werden.
- Einen Schritt, in dem die Karte die im Verschlüsselungsschritt erzeugten verschlüsselten Daten empfängt.
- Entschlüsselungsschritt, in dem die verschlüsselten Daten auf der Karte mit einem auf der Karte vorhandenen öffentlichen Schlüssel entschlüsselt werden, um die auf die Karte zu ladenden Daten zu erhalten, wobei der geheime Schlüssel und der öffentliche Schlüssel einem asymmetrischen Verschlüsselungsalgorithmus angehören.
- Einen Schritt, in dem die mit dem öffentlichen Schlüssel entschlüsselten Daten im Hinblick auf ihre Übereinstimmung mit einer Norm überprüft werden.
- Einen Schritt zum Speichern, in dem die im Entschlüsselungsschritt erhaltenen und auf die Karte zu ladenden Daten in einem auf der Karte vorhandenen Speicher abgelegt werden.

2. Verfahren zum Laden von Daten auf eine Karte mit Mikroprozessor nach Anspruch 1 und in dem der Verschlüsselungsalgorithmus der RSA-Algorithmus ist.

3. Verfahren zum Laden von Daten auf eine Karte mit Mikroprozessor nach Anspruch 1 oder 2 und in dem vor dem Verschlüsselungsschritt das Datenformat durch die befugte Person vorbestimmt wird, wobei die Karte mit Mikroprozessor die Daten nach dem Entschlüsselungsschritt zurückweisen kann, wenn diese nicht das vorbestimmte Format einhalten.

4. Verfahren zum Laden von Daten auf eine Karte mit Mikroprozessor nach Anspruch 3 und in dem die Daten in Übereinstimmung mit der Norm ISO 9796 formatiert werden.

5. Verfahren, zum Laden von Daten auf eine Karte mit Mikroprozessor nach einem beliebigen Anspruch 1 bis 4 und in dem die Karte auch einen Logikriegel aufweist, der beim Laden der Laden offen bleibt und sich nach dem Laden schließt, um das spätere Lesen der auf der Karte gespeicherten Daten zu verhindern.

6. Verfahren zum Laden von Daten auf eine Karte mit Mikroprozessor nach einem beliebigen Anspruch 1 bis 5 und in dem die Daten über ein Kommunikationsnetz auf die Karte ferngeladen werden.
